# EUROPEAN PATENT APPLICATION

(11) **EP 3 306 361 A1**
(43) Date of publication of application: **11.04.2018**
(21) Application number: 15893862.1
(22) Date of filing: 17.08.2015
(51) Int. Cl.: G02B 5/128, G02B 1/10

(54) **REFLECTIVE LIGHT-EMITTING FILM, PREPARATION METHOD AND USE THEREOF**

(30) Priority: 29.05.2015 CN 201510288832
(71) Applicant: Shih, Ying-Chi, Taipei, Taiwan (TW)
(72) Inventor: SHIH, Ying-Chi, Taipei, Taiwan (TW); SHIH, Hsin-An, Taipeh, Taiwan (TW)
(74) Representative: Cabinet Chaillot
(86) International application number: PCT/CN2015/087231
(87) International publication number: WO 2016/192206

(57) **Abstract**

Disclosed are a reflective light-emitting film, preparation method and use thereof. The reflective light-emitting film has a layered structure comprising the following sequentially disposed layers: a reflective layer (2) formed by adhering, via an adhesive, a plurality of optical elements (1) therein; an attached layer (3) attached to a surface of a substrate; and a light-emitting color layer (4). The light-emitting element can be electroplated to reflect multi-color light. The attached layer (3) has a luminescent powder and a color or a first pattern applied or printed thereon to form the light-emitting color layer (4), or a surface of the reflective layer (2) has the luminescent powder and the color or the first pattern applied or printed thereon to form the light-emitting color layer (4). The reflective light-emitting film can reflect light and absorb light when illuminated. As the reflective light-emitting film can emit light after absorbing light, the reflective light-emitting film can emit light with or without being illuminated. Moreover, the reflective light-emitting film can reflect multi-color light when illuminated and produce an image-changing effect corresponding to a variation in an illumination distance, brightness and an observation angle, thereby providing a satisfactory light-reflecting effect and light-emitting effect, improving a warning effect and security, and enhancing an anti-counterfeit effect and aesthetic appeal.

## Description

### Technical Field

The disclosure relates to the technical field of reflective luminous articles, and in particular to a reflective luminous film, a preparation method and a use thereof.

### Background Art

With the progress of era, reflective articles have washable materials developed therefor and have had many changes in colors and patterns. Generally, reflective articles are used for the exterior decoration of clothes, waistcoats, hats, shoes or vehicles, providing traffic safety for pedestrians and vehicle operators, or, the reflective articles serve as large advertisement signboards, posters or traffic signs, etc., so that a warning or caution effect is achieved by virtue of the reflective articles.

For example, a Chinese patent application entitled "Reflective article and manufacturing method thereof" of which the application number is 200910225456.7 discloses a reflective article which has a layered structure including the following sequentially disposed layers: a reflective layer into which an optical element is embedded, a color layer and a reflector layer, wherein the optical element is embedded into the reflective layer and a flat surface is formed through the reflective layer, so that a flat layered structure is achieved through a small amount of adhesive and ink. The reflective article may have the light transmission and reflection effect of the inner reflector layer improved due to the thin color layer. However, the reflective article still has drawbacks as follows. 1. The reflective article reflects light only when being illuminated, and does not reflect light without being illuminated; the caution effect is poor. 2. The color layer will shield the reflected light from the reflector layer, and the reflection effect needs to be improved.

Another Chinese patent application entitled "Reflective and noctilucent integrated printed fabric and manufacture process thereof" of which the application number is 201410261141.9 discloses a fabric main body of which any one surface is provided with a reflective layer, a fluorescent layer, a silk printing/oil printing layer and a bonded pattern layer sequentially from top to bottom. The reflective and noctilucent integrated printed fabric presents an effect which has no difference from that of common fabrics (braids, cloths and the like) under natural light; when the braids (cloths) are transferred to a dark place after absorbing enough light source, heat-transfer printing patterns of the braids can emit visible light sources; in addition, the reflective and noctilucent integrated printed fabric can reflect a light source under illumination of the light source in the dark place, so that the heat-transfer printing patterns can be clearly displayed; therefore, both reflective and noctilucent effects are achieved. However, the reflective film of the printed fabric is made of a transparent reflective glass bead and a substrate; the reflective film can reflect a white light source only, but cannot produce a pattern variable visual effect corresponding to a variation in illumination angle, distance and brightness.

### Disclosure of the Invention

An object of the disclosure is to remedy the above described drawbacks of existing technologies by providing a reflective luminous film, a preparation method and a use thereof. The reflective luminous film may reflect light and absorb light when being illuminated, and may emit light after absorbing light, thereby further improving a warning effect and security; moreover, the reflective luminous film may reflect multi-color light and may produce a pattern variable effect corresponding to a variation in illumination distance, brightness and observation angle on the basis of the color or pattern of the film.

To this end, a first aspect of the disclosure provides a reflective luminous film, which has a layered structure including the following sequentially disposed layers: a reflective layer formed by adhering, via an adhesive, a plurality of optical elements therein; an adhesion layer attached to a surface of a substrate, and a luminous color layer; wherein the adhesion layer has luminescent powder and a color or a first pattern applied or printed thereon to form the luminous color layer, or a surface of the reflective layer has luminescent powder and a color or a first pattern applied or printed thereon to form the luminous color layer.

Herein, the optical element may be directly provided as an optical element which is subjected to electroplating process in advance and is capable of reflecting multi-color light; the optical element can cause the reflective layer to reflect multi-color light. Alternatively, the reflective layer also may be electroplated with an electroplating coating used for causing the optical element to reflect multi-color light, so that the reflective layer can reflect multi-color light.

As a preferable embodiment, the optical element is provided as a reflective bead made of glass, ceramic or synthetic resin, and the electroplated material includes aluminum, silver, tin, chromium, zinc or combinations thereof.

As a preferable embodiment, a strippable release carrier and a release layer are disposed on the surface of the reflective layer, and the release layer is positioned between the release carrier and the reflective layer. Herein, the release carrier is provided as a PET film, and the release layer is made from polyethylene, polypropylene, polybutylene, polyvinyl chloride, polyester or combinations thereof.

As a preferable embodiment, the adhesion layer is made from PU adhesive, TPU adhesive, bicomponent crylic acid, methyl carbamate, ester, ether, epoxy, carbamide, carbonate ester, acrylate, acrylic acid, alkene, chloroethylene, amide, alcohol acid or a polymer formed by combinations of the above, and the adhesive is made from methyl carbamate, ester, ether, epoxy, carbamide, carbonate ester, acrylate, acrylic acid, alkene, chloroethylene, amide, alcohol acid or a polymer formed by combinations of the above.

As a preferable embodiment, the surface of the reflective layer has a second pattern or a color applied or printed thereon to form at least one external color layer.

A second aspect of the disclosure provides a preparation method for a reflective luminous film, which includes the following steps:
(1) preparing a release carrier, on which is disposed a release layer;
(2) adhering, via an adhesive, an optical element which is subjected to electroplating process in advance and is capable of reflecting multi-color light to a surface of the release layer to form a reflective layer; or, adhering, via an adhesive, an optical element to a surface of the release layer to form a reflective layer, and electroplating, on the reflective layer, an electroplating coating used for causing the optical element to reflect multi-color light;
(3) forming, on a bottom surface of the reflective layer or on a bottom surface of the electroplating coating, an adhesion layer which may be attached to a surface of a substrate; and
(4) applying or printing luminescent powder and a color or a first pattern on the adhesion layer to form a luminous color layer; or, applying or printing luminescent powder and a color or a first pattern on a surface of the reflective layer from which the release carrier and the release layer are stripped, to form a luminous color layer.

As a preferable embodiment, the preparation method further includes the following steps after step (4):
(5) when the adhesion layer is attached to a surface of a substrate, stripping the release carrier and the release layer; and
(6) applying or printing a second pattern or a color on the surface of the reflective layer to form at least one external color layer.

A third aspect of the disclosure provides a reflective luminous object, which includes an object main body and a reflective luminous film as described in the above technical scheme. The reflective luminous film may be connected with an object main body, which is manufactured by way of textile, coating, printing, injection molding, ejection, dispensing and so on, to form a reflective luminous object. Herein, the object main body includes clothing, cases, bags, hats, shoes, socks, umbrellas, boxes, flags, signs, stickers, tapes, raincoats, advertisement signboards, posters, computer panels, TV screens, LCD panels, and main materials, auxiliary materials, components and parts of the above products, for example, luminous chips of computer or TV displays (panels), etc. Besides the above various types of products, the reflective luminous object, of course, also may be manufactured into other finished products (commodities) and accessories.

Compared with existing technologies, the disclosure has beneficial effects as follows.
1. The reflective luminous film of the disclosure has optical elements, which have reflective performance, embedded into the reflective layer thereof; the luminous color layer has luminescent powder and a color or a first pattern applied or printed therein; under the illumination of light source in the dark, the reflective luminous film may reflect light and absorb light, and may emit light after absorbing light, so that the reflective luminous film may emit light with or without being illuminated, thereby improving a warning effect and security.
2. The optical element of the disclosure may reflect multi-color light after being subjected to electroplating process; before the reflective luminous film reflects light, the pattern or color of the luminous color layer can be seen; when being illuminated, the reflective luminous film not only may reflect multi-color light, but also may produce a pattern variable effect corresponding to a variation in illumination distance, brightness and observation angle; of course, a multi-color reflection effect containing only multi-color light may be achieved at a certain illumination angle; the reflection effect is satisfactory, both anti-counterfeit effect and aesthetic appeal are enhanced.
3. When the outer surface of the reflective layer has a pattern or color applied or printed thereon, the reflective luminous film can display the pattern or color applied or printed thereon in the condition of original reflection and only multi-color light, avoiding the monotony of only multi-color light and enhancing aesthetic appeal.

### Brief Description of Drawings

For a better understanding of the technical scheme in the embodiments of the disclosure or in existing technologies, accompanying drawings needed in the description of the embodiments or existing technologies are simply illustrated below. Obviously, the accompanying drawings described below are some embodiments of this application. For the ordinary skill in the field, other accompanying drawings may be obtained according to these accompanying drawings without creative work.
FIG. 1 is a sectional view of a reflective luminous film provided by an Embodiment 1 of the disclosure.
FIG. 2 is a sectional view of a reflective luminous film provided by an Embodiment 2 of the disclosure.
FIG. 3 is a sectional view of a reflective luminous film provided by an Embodiment 3 of the disclosure.
FIG. 4 is a sectional view of a reflective luminous film provided by an Embodiment 4 of the disclosure.
FIG. 5 is a sectional view of a reflective luminous film provided by an Embodiment 5 of the disclosure.

### Best Mode for Carrying out the Invention

The purpose, technical scheme and advantages of the embodiments of the disclosure will become more clearly understood from the clear and complete description of the technical scheme in the embodiments of the disclosure below taken in conjunction with the accompanying drawings in the embodiments of the disclosure. Obviously, the embodiments described hereinafter are simply part embodiments of the disclosure, not all the embodiments. All other embodiments obtained by the ordinary skill in this field based on the embodiments in the disclosure without creative work are intended to be included in the scope of protection of the disclosure.

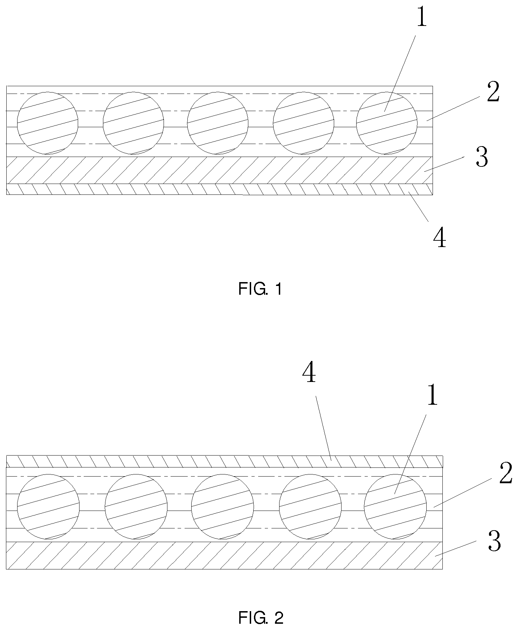

Please refer to FIG. 1, an Embodiment 1 of the disclosure provides a reflective luminous film, which has a layered structure including the following sequentially disposed layers: a reflective layer 2 formed by adhering, via an adhesive, a plurality of optical elements 1 therein; an adhesion layer 3 attached to a surface of a substrate, and a luminous color layer 4. The structure of each layer is described below in detail.

Specifically, the optical element may be provided as a reflective bead made of glass, ceramic or synthetic resin. In this embodiment, the optical element 1 preferably is provided as a reflective glass bead, which more preferably has a particle size of 20 to 400 meshes and a refractive index of greater than 1.5.

In addition, the reflective glass beads need to be subjected to electroplating process in advance, and then are subjected to adhesion via an adhesive; the electroplated material may be aluminum, silver, tin, chromium, zinc or combinations thereof. Herein, the reflective glass beads need to achieve an effect of reflecting multi-color light after being subjected to electroplating process, with the purpose of allowing the reflective luminous film to produce a pattern variable effect corresponding to a variation in illumination angle, distance, and brightness.

In the reflective layer 2, the way of the adhesive covering the optical element 1 includes coating, stamping or impression and so on. Herein, a plurality of optical elements 1 form a flat surface after adhesion. The adhesive is made from methyl carbamate, ester, ether, epoxy, carbamide, carbonate ester, acrylate, acrylic acid, alkene, chloroethylene, amide, alcohol acid or a polymer formed by combinations of the above.

In the adhesion layer 3, the adhesion layer is made from PU adhesive, TPU adhesive, bicomponent crylic acid, methyl carbamate, ester, ether, epoxy, carbamide, carbonate ester, acrylate, acrylic acid, alkene, chloroethylene, amide, alcohol acid or a polymer formed by combinations of the above. Of course, the adhesion layer also may be made from other gels, and it is not limited to this embodiment.

The adhesion layer 3 has luminescent powder and a color or a first pattern applied or printed thereon to form the luminous color layer 4. Herein, the way of forming the color or pattern on the adhesion layer 3 includes computer printing, screen printing, ink jetting, embossing or other various printing modes. The reflective luminous film of the disclosure may transfer the luminescent powder and color or pattern to surfaces of any type of materials through the adhesion layer 3.

A preparation method for the reflective luminous film of the Embodiment 1 of the disclosure includes the following steps:
(1) preparing a release carrier 5, on which is disposed a release layer 8;
(2) adhering, via an adhesive, an optical element 1 which is subjected to electroplating process in advance and is capable of reflecting multi-color light to a surface of the release layer to form a reflective layer 2;
(3) forming, on a bottom surface of the reflective layer 2, an adhesion layer 3 which may be attached to a surface of a substrate;
(4) applying or printing luminescent powder and a color or a first pattern on the adhesion layer 3 to form a luminous color layer 4; and
(5) when the adhesion layer 3 is attached to a surface of a substrate, stripping the release carrier 5 and the release layer 8.

Please refer to FIG. 2, an Embodiment 2 of the disclosure provides another reflective luminous film, which has a layered structure including the following sequentially disposed layers: a luminous color layer 4, a reflective layer 2 formed by adhering, via an adhesive, a plurality of optical elements 1 therein, and an adhesion layer 3 attached to a surface of a substrate. The difference between the reflective luminous film described in the Embodiment 2 of the disclosure and the reflective luminous film described in the above Embodiment 1 of the disclosure lies in that: a surface of the reflective layer has luminescent powder and a color or a first pattern applied or printed thereon to form the luminous color layer 4, and the luminous color layer 4 is positioned on the outmost layer of the reflective luminous film.

Herein, when the surface of the reflective layer 2 has a color or a first pattern applied or printed thereon, the reflective luminous film can display the color or first pattern applied or printed thereon in the condition of original reflection and only multi-color light, avoiding the monotony of only multi-color light and enhancing aesthetic appeal.

A preparation method for the reflective luminous film of the Embodiment 2 of the disclosure includes the following steps:
(1) preparing a release carrier 5, on which is disposed a release layer 8;
(2) adhering, via an adhesive, an optical element which is subjected to electroplating process in advance and is capable of reflecting multi-color light to a surface of the release layer 8 to form a reflective layer 2;
(3) forming, on a bottom surface of the reflective layer 2, an adhesion layer 3 which may be attached to a surface of a substrate;
(4) when the adhesion layer 3 is attached to a surface of a substrate, stripping the release carrier 5 and the release layer 8; and
(5) applying or printing luminescent powder and a color or a first pattern on a surface of the reflective layer 2 from which the release carrier 5 and the release layer 8 are stripped, to form a luminous color layer 4.

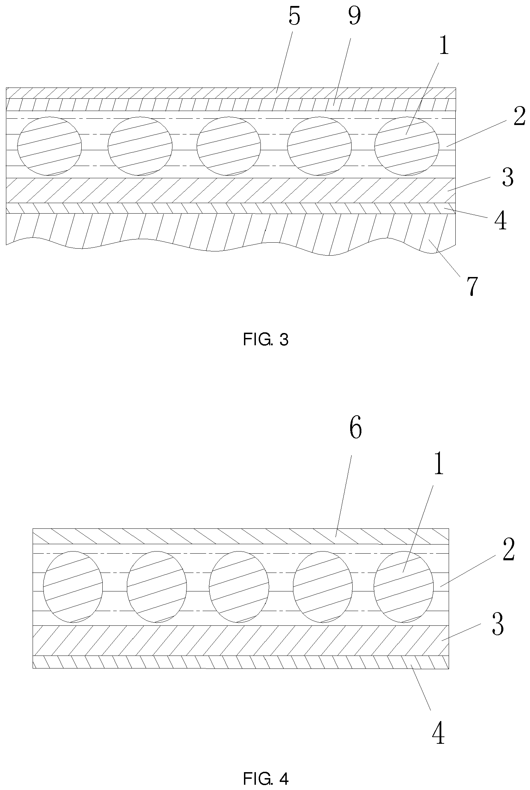

Please refer to FIG. 3, an Embodiment 3 of the disclosure provides yet another reflective luminous film, which has a layered structure including the following sequentially disposed layers: a strippable release carrier 5, a release layer 8, a reflective layer 2 formed by adhering, via an adhesive, a plurality of optical elements 1 therein, an adhesion layer 3 attached to a surface of a substrate, and a luminous color layer 4. The difference between the reflective luminous film described in the Embodiment 3 of the disclosure and the reflective luminous film described in the above Embodiment 1 of the disclosure lies in that: a strippable release carrier 5 and a release layer 8 are disposed on a surface of the reflective layer 2, and the release layer 8 is positioned between the release carrier 5 and the reflective layer 2. More preferably, the release carrier 5 is provided as a PET film or other available carriers. The release layer 8 is made from polyethylene, polypropylene, polybutylene, polyvinyl chloride, polyester or combinations thereof.

Herein, the release carrier 5 is equivalent to a substrate for placing the optical element 1 during the manufacturing operation, so that the optical element 1 may be attached to the release layer 8 of the release carrier 5; and next, the adhesive is coated to form a flat surface of reflective layer 2 so as to make the optical element 1 fixed.

A preparation method for the reflective luminous film of the Embodiment 3 of the disclosure includes the following steps:
(1) preparing a release carrier 5, on which is disposed a release layer 8;
(2) adhering, via an adhesive, an optical element which is subjected to electroplating process in advance and is capable of reflecting multi-color light to a surface of the release layer 8 to form a reflective layer 2;
(3) forming, on a bottom surface of the reflective layer 2, an adhesion layer 3 which may be attached to a surface of a substrate; and
(4) applying or printing luminescent powder and a color or a first pattern on the adhesion layer 3 to form a luminous color layer 4.

Please refer to FIG. 4, an Embodiment 4 of the disclosure provides yet still another reflective luminous film, which has a layered structure including the following sequentially disposed layers: an external color layer 6, a reflective layer 2 formed by adhering, via an adhesive, a plurality of optical elements 1 therein, an adhesion layer 3 attached to a surface of a substrate, and a luminous color layer 4. The difference between the reflective luminous film described in the Embodiment 4 of the disclosure and the reflective luminous film described in the above Embodiment 1 of the disclosure lies in that: the surface of the reflective layer 2 has a second pattern or a color applied or printed thereon to form the external color layer 6. The external color layer 6 is positioned on the outmost layer of the reflective luminous film.

Herein, when the surface of the reflective layer 2 has a pattern or color again applied or printed thereon, the reflective luminous film can display the pattern or color applied or printed thereon in the condition of original reflection and only multi-color light, avoiding the monotony of only multi-color light and enhancing aesthetic appeal. It should be noted that multiple external color layers 6 also may be disposed; if more external color layers 6 are disposed, the color of a next layer or lower layer can be better protected, so that the effect of abrasion reduction is better.

A preparation method for the reflective luminous film of the Embodiment 4 of the disclosure includes the following steps:
(1) preparing a release carrier 5, on which is disposed a release layer 8;
(2) adhering, via an adhesive, an optical element which is subjected to electroplating process in advance and is capable of reflecting multi-color light to a surface of the release layer 8 to form a reflective layer 2;
(3) forming, on a bottom surface of the reflective layer 2, an adhesion layer 3 which may be attached to a surface of a substrate;
(4) applying or printing luminescent powder and a color or a first pattern on the adhesion layer 3 to form a luminous color layer 4;
(5) when the adhesion layer 3 is attached to a surface of a substrate, stripping the release carrier 5 and the release layer 8; and
(6) applying or printing a color or a second pattern on the surface of the reflective layer 2 from which the release carrier 5 and the release layer 8 are stripped, to form at least one external color layer 6.

### Embodiment 5

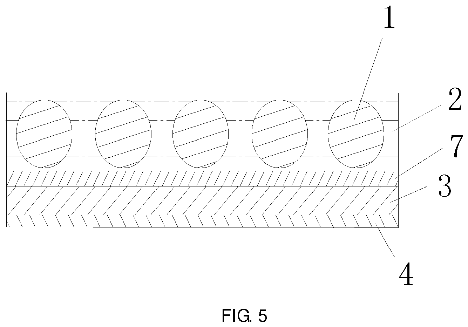

Please refer to FIG. 5, an Embodiment 5 of the disclosure provides yet still further another reflective luminous film, which has a layered structure including the following sequentially disposed layers: a reflective layer 2 formed by adhering, via an adhesive, a plurality of optical elements 1 therein, an electroplating coating 7 positioned on a bottom surface of the reflective layer 2, an adhesion layer 3 attached to a surface of a substrate, and a luminous color layer 4. The difference between the reflective luminous film described in the Embodiment 5 of the disclosure and the reflective luminous film described in the above Embodiment 1 of the disclosure lies in that: the optical elements 1 are not necessary to be subjected to electroplating process in advance, and, after the optical elements 1 form the reflective layer 2 through the adhesion via an adhesive, the bottom surface of the reflective layer 2 is electroplated with the electroplating coating 7 used for causing the optical element to reflect multi-color light.

A preparation method for the reflective luminous film of the Embodiment 5 of the disclosure includes the following steps:
(1) preparing a release carrier 5, on which is disposed a release layer 8;
(2) adhering, via an adhesive, an optical element 1 to a surface of the release layer 8 to form a reflective layer 2, and electroplating, on a bottom surface of the reflective layer 2, an electroplating coating 7 used for causing the optical element 1 to reflect multi-color light;
(3) forming, on a bottom surface of the electroplating coating 7, an adhesion layer 3 which may be attached to a surface of a substrate;
(4) applying or printing luminescent powder and a color or a first pattern on the adhesion layer 3 to form a luminous color layer 4; and
(5) when the adhesion layer 3 is attached to a surface of a substrate, stripping the release carrier 5 and the release layer 8.

Herein, on the basis of the reflective luminous film described in the Embodiment 5 of the disclosure, the luminous color layer 4 also may be disposed on the surface of the reflective layer 2, alternatively. In addition, the surface of the reflective layer 2 also may have a second pattern or a color applied or printed thereon to form at least one external color layer. It should be noted that the position of the electroplating coating 7 is different depending on different electroplating methods adopted. The electroplating coating 7 also may be positioned on the top surface of the reflective layer 2, or positioned on both the top and bottom surfaces of the reflective layer 2, and it is not limited to this embodiment.

In existing technologies, the optical element of the reflective luminous film generally is formed by a transparent reflective glass bead, or the bead film is plated with aluminum; therefore, only white light can be reflected under the illumination of light source in the dark; before the reflective luminous film reflects light, the pattern on the film can be seen; when the reflective luminous film is being illuminated, the pattern disappears; however, no matter from which angle to watch, only white light can be seen.

In the embodiments of the disclosure, the optical element may reflect multi-color light after being subjected to electroplating process; before the reflective luminous film reflects light, the pattern of the luminous color layer can be seen; when the reflective luminous film is being illuminated, as the reflection of multi-color light and the variation in illumination distance, brightness and observation angle, the visual effect of people watching the pattern changes; therefore, a pattern variable effect is produced. Herein, a multi-color reflection effect containing only multi-color light may be achieved at a certain illumination angle (for example, from the front side).

In actual applications, the reflective luminous film described in the disclosure may be connected with an object main body, which is manufactured byway of textile, coating, printing, injection molding, ejection, dispensing and so on, to form a reflective luminous object, so that the reflective luminous object has a multi-color reflection effect, a luminous effect and a pattern variable effect. Specifically, the object main body includes clothing, cases, bags, hats, shoes, socks, umbrellas, boxes, flags, signs, stickers, tapes, raincoats, advertisement signboards, posters , computer panels, TV screens, LCD panels, and main materials, auxiliary materials, components and parts of the above products, for example, luminous chips of computer or TV displays (panels), etc. Besides the above various types of products, the reflective luminous object, of course, also may be manufactured into other finished products (commodities) and accessories.

To sum up, the reflective luminous film of the disclosure may reflect light and absorb light when being illuminated, and may emit light after absorbing light, so that the reflective luminous film may emit light with or without being illuminated, thereby further improving a warning effect and security. Moreover, when the reflective luminous film is being illuminated, as the reflection of multi-color light and the variation in illumination distance, brightness and observation angle, a pattern variable effect is produced. The reflection effect is satisfactory, both anti-counterfeit effect and aesthetic appeal are enhanced.

The above embodiments are preferred implementations of the disclosure; however, the implementations of the disclosure are not limited to the above embodiments. Any other changes, modifications, substitutions, combinations and simplifications made without departing from the spirit essence and principle of the disclosure are equivalent replacement methods and are intended to be included in the scope of protection of the disclosure. In addition, besides the steps of the various preparation methods above, changes in the attachment (adhesion) sequence and in the arrangement sequence of each layer and changes in the application of colors on different materials and in the sequence of the application of colors on different materials also are intended to be included in the scope of protection of the claims of the disclosure, even though they may cause a difference in brightness and a difference in pattern brilliance.

## Claims

1. A reflective luminous film, which has a layered structure comprising the following sequentially disposed layers:
a reflective layer formed by adhering, via an adhesive, a plurality of optical elements therein;
an adhesion layer attached to a surface of a substrate; and
a luminous color layer;
**characterized in that**: the optical element is an optical element which is subjected to electroplating process in advance and is capable of reflecting multi-color light, the adhesion layer has luminescent powder and a color or a first pattern applied or printed thereon to form the luminous color layer, or a surface of the reflective layer has luminescent powder and a color or a first pattern applied or printed thereon to form the luminous color layer; or,
the reflective layer is electroplated with an electroplating coating used for causing the optical element to reflect multi-color light, the adhesion layer has luminescent powder and a color or a first pattern applied or printed thereon to form the luminous color layer, or a surface of the reflective layer has luminescent powder and a color or a first pattern applied or printed thereon to form the luminous color layer.

2. The reflective luminous film according to claim 1, **characterized in that**: the optical element is provided as a reflective bead made of glass, ceramic or synthetic resin, and the electroplated material comprises aluminum, silver, tin, chromium, zinc or combinations thereof.

3. The reflective luminous film according to claim 1, **characterized in that**: a strippable release carrier and a release layer are disposed on the surface of the reflective layer, and the release layer is positioned between the release carrier and the reflective layer.

4. The reflective luminous film according to claim 3, **characterized in that**: the release carrier is provided as a PET film, and the release layer is made from polyethylene, polypropylene, polybutylene, polyvinyl chloride, polyester or combinations thereof.

5. The reflective luminous film according to claim 1, **characterized in that**: the adhesion layer is made from PU adhesive, TPU adhesive, bicomponent crylic acid, methyl carbamate, ester, ether, epoxy, carbamide, carbonate ester, acrylate, acrylic acid, alkene, chloroethylene, amide, alcohol acid or a polymer formed by combinations of the above, and the adhesive is made from methyl carbamate, ester, ether, epoxy, carbamide, carbonate ester, acrylate, acrylic acid, alkene, chloroethylene, amide, alcohol acid or a polymer formed by combinations of the above.

6. The reflective luminous film according to claim 1, **characterized in that**: the surface of the reflective layer has a second pattern or a color applied or printed thereon to form at least one external color layer.

7. A preparation method for a reflective luminous film, **characterized in that** the method comprises the following steps:
(1) preparing a release carrier, on which is disposed a release layer;
(2) adhering, via an adhesive, an optical element which is subjected to electroplating process in advance and is capable of reflecting multi-color light to a surface of the release layer to form a reflective layer; or, adhering, via an adhesive, an optical element to a surface of the release layer to form a reflective layer, and electroplating, on the reflective layer, an electroplating coating used for causing the optical element to reflect multi-color light;
(3) forming, on a bottom surface of the reflective layer or on a bottom surface of the electroplating coating, an adhesion layer which may be attached to a surface of a substrate; and
(4) applying or printing luminescent powder and a color or a first pattern on the adhesion layer to form a luminous color layer; or, applying or printing luminescent powder and a color or a first pattern on a surface of the reflective layer from which the release carrier and the release layer are stripped, to form a luminous color layer.

8. The preparation method for a reflective luminous film according to claim 7, **characterized in that** the preparation method further comprises the following steps after step (4):
(5) when the adhesion layer is attached to a surface of a substrate, stripping the release carrier and the release layer; and
(6) applying or printing a second pattern or a color on the surface of the reflective layer to form at least one external color layer.

9. A reflective luminous object, **characterized in that** the reflective luminous object comprises an object main body and a reflective luminous film as claimed in any one of claims 1 to 6, wherein the reflective luminous film is connected on a substrate of the object main body.

10. The reflective luminous object according to claim 9, **characterized in that** the object main body comprises clothing, cases, bags, hats, shoes, socks, umbrellas, boxes, flags, signs, stickers, tapes, raincoats, advertisement signboards, posters, computer panels, TV screens, LCD panels, and luminous chips of computer or TV displays.
